# EUROPÄISCHE PATENTSCHRIFT

(11) **EP 1 518 153 B1**
(45) Veröffentlichungstag und Bekanntmachung des Hinweises auf die Patenterteilung: **19.06.2019**
(21) Anmeldenummer: 03738105.0
(22) Anmeldetag: 01.07.2003
(51) Int. Cl.: G05B 19/042, G06F 1/00

(54) **VERFAHREN ZUM SCHUTZ VOR UNERLAUBTEM ZUGRIFF AUF EIN FELDGERÄT IN DER PROZESSAUTOMATISIERUNGSTECHNIK**
METHOD PROVIDING PROTECTION FROM UNAUTHORIZED ACCESS TO A FIELD DEVICE USED IN PROCESS AUTOMATION TECHNOLOGY
PROCEDE POUR PROTEGER UN ACCES NON AUTORISE A UN DISPOSITIF DE TERRAIN DANS LA TECHNIQUE D'AUTOMATISATION DE PROCESSUS

(30) Priorität: 02.07.2002 DE 10229704
(43) Veröffentlichungstag der Anmeldung: 30.03.2005
(73) Patentinhaber: Endress+Hauser Process Solutions AG, 4153 Reinach (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2003/006963
(87) Internationale Veröffentlichungsnummer: WO 2004/006031

(56) Entgegenhaltungen:
- EP-A- 1 128 242
- WO-A-93/25948
- WO-A1-03/036400
- US-A- 5 127 099
- US-A- 5 805 442
- US-B1- 6 321 272
- A. MENEZES, P. VAN OORSCHOT, S. VANSTONE: "Handbook of Applied Cryptography", 1996, CRC PRESS, XP001525010, * Chapter 10: Identification and Entity Authentication *

## Beschreibung

Die Erfindung betrifft ein Verfahren zum Schutz vor unerlaubtem Zugriff auf ein Feldgerät in der Prozessautomatisierungstechnik gemäß dem Oberbegriff des Anspruchs 1.

In der Prozessautomatisierungstechnik werden vielfach Feldgeräte eingesetzt, die in einem industriellen Prozessablauf verschiedene Prozessvariable messen (Sensoren) oder Regelgrößen steuern (Aktoren). Sensoren zur Durchfluss-, Füllstands-, Druck-, Temperaturbestimmung etc. sind allgemein bekannt. Zur Erfassung der entsprechenden Prozessvariablen Massen- oder Volumendurchfluss, Füllhöhe, Druck, Temperatur, etc. sind die Sensoren in unmittelbarer Nähe zu der betreffenden Prozesskomponente angeordnet.

Als Beispiel für Aktoren sind steuerbare Ventile zu nennen, die den Durchfluss einer Flüssigkeit oder eines Gases in einem Rohrleitungsabschnitt regeln.

Die Sensoren liefern Messwerte, die dem aktuellen Wert der erfassten Prozessvariable entsprechen. Diese Messwerte werden an eine Steuereinheit z. B. SPS (Speicherprogrammierbare Steuerung), Warte- oder Prozessleitsystem PLS über einen Datenbus weitergeleitet.

In der Regel erfolgt die Prozesssteuerung von der Steuereinheit, wo die Messwerte verschiedener Feldgeräte ausgewertet werden und aufgrund der Auswertung Steuersignale für die entsprechenden Aktoren erzeugt werden. Neben der reinen Messwertübertragung können Feldgeräte auch zusätzliche Informationen (Diagnose, Status, etc.) an die Steuereinheit übertragen. Die Parametrierung und Konfigurierung der Feldgeräte erfolgt ebenfalls über den Datenbus.

### BESTÄTIGUNGSKOPIE

Die Signalübertragung zwischen Feldgerät und Steuereinheit kann in analoger oder digitaler Form erfolgen, bekannte Standards sind HART®, Profibus®, Foundation Fieldbus® oder CAN®-Bus. Vielfach ist der Datenbus mit einem übergeordneten Firmennetzwerk verbunden. Zwischen dem Datenbus (Feldbus) und dem Firmennetzwerk dient ein Controller als Gateway. Über das Firmennetzwerk erfolgt insbesondere die Prozessbeobachtung sowie die Prozessvisualisierung und das Engineering mittels entsprechender Rechnereinheiten.

Feldbus und Firmennetzwerk bezeichnet man auch als Prozesskontrollsystem.

Die Sicherheitsanforderungen an Prozesskontrollsysteme werden immer strenger, deshalb sind in vielen Unternehmen Prozesskontrollsysteme von anderen Firmennetzwerken (SAP, Business) streng getrennt. Dadurch sollen unerlaubte Zugriffe auf Feldgeräte vermeiden werden. Momentan konzentrieren sich die Anstrengungen im Hinblick auf Sicherheit bei Prozesskontrollsystemen auf die Netzwerk-Ebene.

Zur Vermeidung von firmenfremden Angriffen werden sogenannte Firewalls eingesetzt. Neben firmenfremden Angriffen sind aber firmeninterne Angriffe ebenso gefährlich. Bei firmeninternen Angriffen können z. B. Parameter in Feldgeräten geändert werden oder die gesamte Kontrollstrategie geändert werden. Dies kann zu erheblichen Produktionsstörungen führen.

Aus diesem Grunde sind Programme, die die Parametrierung, Konfigurierung und eine Veränderung der Kontrollstrategie ermöglichen (SCADA-Systeme oder Configuration Tools) mit einem Passwortschutz ausgestattet. Hierbei ist auch eine Authorisierung der Personen die Änderungen durchführen notwendig.

Z. B. können bei dem Centum CS 1000 Prozesskontrollsystem von Yokogawa kritische Funktionsblöcke, die z.B. in Feldgeräten ablaufen, nur über die Eingabe von zwei Passwörtern verschiedener Personen geändert werden.

Bei der Firma Endress + Hauser gibt es ein Sicherheitsschutz gegen unberechtigtes ändern von Parametern bei Feldgeräten über eine Verriegelung. Die Person, die Änderung vornehmen möchte, muss am Feldgerät einen Code eingeben bevor Änderungen am Feldgerät möglich werden.

Heutige Prozesskontrollsysteme arbeiten häufig auf Ethernet-Basis. Hierbei ist es relativ einfach über eine entsprechende Konfiguriereinheit (Laptop, Handheld) direkt auf die Feldgeräte zuzugreifen und dabei Parameter und Einstellungen an diesen zu ändern. Mit einer derartigen zusätzlichen Konfiguriereinheit ist es ohne weiteres möglich auch die gesamte Kontrollstrategie zu ändern.

Eine Kontrollstrategie kann z. B. mit dem 302 Syscon von der Firma SMAR erzeugt werden und in die Feldgeräte geladen werden.

Die EP 01128242 A2 offenbart ein Verfahren zur Sicherstellung der Datenintegrität einer Software für ein Steuergerät eines Kraftfahrzeugs, in dem in einem Speicher des Steuergerätes eine das Steuergerät in seiner Wirkungsweise beeinflussende Software speicherbar ist. Es wird vorgeschlagen, ein Schlüsselpaar zum Ver- und Entschlüsseln von elektronischen Daten bereitzustellen, den ersten Schlüssel in einem oder für ein Steuergerät in dem Kraftfahrzeug zu hinterlegen, mit dem zweiten Schlüssel eine einzuspielende Software zu signieren, die signierte Software in den Speicher des Steuergeräts einzuspielen und die Signatur der Software mittels dem in oder für das Steuergerät hinterlegten Schlüssel zu überprüfen und dann zu akzeptieren, wenn die Überprüfung mit positivem Ergebnis verläuft.

Die US 5805442 A1 offenbart ein integriertes Steuersystem. umfassend eine oder mehrere Steuerungen, die jeweils zur Ausführung einer Steuerfunktion und zum Sammeln von Daten (normalerweise von Sensoren), die für die Steuerfunktion relevant sind, ausgestattet sind. Jede Steuerung enthält Computerspeichermittel, beispielsweise einen Computerspeicher, zum Speichern der relevanten Daten und Anweisungen, die den Daten zugeordnet sind, um einen entfernten Computer zu veranlassen, eine visuelle Anzeige zu erzeugen, die die Daten in einem vorbestimmten Format enthält; und ein Kommunikationsmodul zum Herstellen eines Kontakts und Erleichtern des Datenaustauschs mit dem entfernten Computer. Der entfernte Computer wiederum enthält auch ein Kommunikationsmodul, das mit dem von der Steuerung getragenen Modul kompatibel ist und das es dem entfernten Computer ermöglicht, die Daten und zugehörigen Anweisungen von einer oder mehreren Steuerungen herunterzuladen. Der entfernte Computer enthält auch eine Einrichtung zum Verarbeiten der Anweisungen zum Erstellen einer durch die Anweisungen codierten Benutzerschnittstelle, und die die Daten enthält. Auf diese Weise werden Steuerungsdaten mit Anweisungen zum Anzeigen dieser Daten gekoppelt, und diese Gesamtheit von Informationen ist dem fernen Computer in frei wählbarer Weise kontinuierlich zugänglich.

Aufgabe der Erfindung ist es ein Verfahren zum Schutz vor unerlaubtem Zugriff auf ein Feldgerät anzugeben, das unerlaubte Änderungen an der Konfigurierung von Feldgeräten verhindert und das kostengünstig und einfach durchführbar ist.

Gelöst wird diese Aufgabe durch das in Anspruch 1 angegebene Verfahren.

Wesentliche Idee der Erfindung ist es, im Feldgerät selbst ein Sicherheitsprogramm abzuspeichern, das bei einem Zugriff auf das Feldgerät über den Datenbus eine Berechtigungsprüfung durchführt. Dadurch kann eine Manipulation am Feldgerät durch Nichtberechtigte in einfacher Weise verhindert werden.

Vorteilhafte Weiterentwicklung der Erfindung sind in den Unteransprüchen angegeben.

Nachfolgend ist die Erfindung anhand eines in der Zeichnung dargestellten Ausführungsbeispiels näher erläutert.

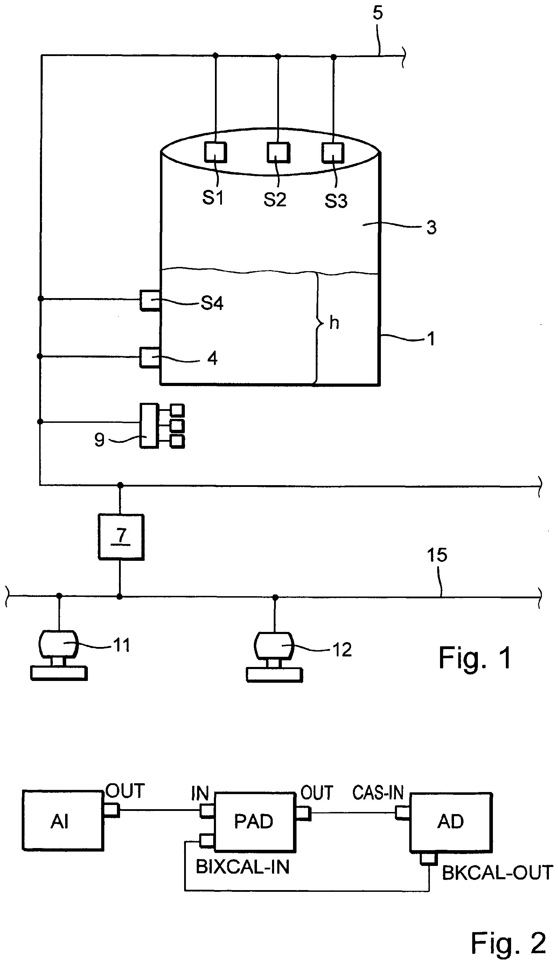

Figur 1 zeigt ein Prozesskontrollsystem das einen Datenbus 5 und ein Firmennetzwerk 15 die über einen Controller 7 (Linking Device) miteinander verbunden sind, umfasst. An den Datenbus 5 (Feldbus) sind verschiedene Sensoren S1, S2, S3, S4 angeschlossen, die zur Bestimmung der Füllhöhe h einer Flüssigkeit in einem Behälter 1 dienen. Am Behälter 1 ist weiterhin eine Anzeigeeinheit 4 angeordnet. Der Datenbus 5 ist weiterhin mit einer Remote I/O- Einheit 9 verbunden, die den Anschluss verschiedener 4 bis 20 mA Messgeräte erlaubt.

An das Firmennetzwerk 15 sind verschiedene Rechnersysteme 11, 12 angeschlossen, die z. B. eine Prozessvisualisierung ermöglichen oder zum Engineering der Prozessanlage dienen.

In Figur 2 ist ein Funktionsblock dargestellt, der definierte Kommunikationsschnittstellen aufweist.

Moderne Datenbusse erlauben nicht nur die Datenübertragung zwischen einem Sensor und einer übergeordneten Einheit sondern auch die Ausführung standardisierter Anwendungsfunktionen wie sie z. B. durch die Fieldbus Foundation® oder die Profibus Nutzer Organisation PNO ® definiert sind. Funktionsblöcke besitzen eine selbständige Kommunikationsfähigkeit und erlauben im Zusammenspiel mit unterschiedlichen Feldgeräten komplizierte Steuervorgänge auszuführen.

Ein einfacher Funktionsblock ist ein PID-Regler der mit einem Funktionsblock in einem Sensor und einem Aktor kommuniziert. In Fig. 2 ist ein PID-Regler Funktionsblock PID dargestellt, der mit einem Analog Input AI und einem Analog Output AO- Funktionsblock verbunden ist. Die Parameter der Funktionsblöcke werden bei der Konfiguration und Parametrierung der Feldgeräte festegelegt. Sie bestimmen im wesentlichen die Funktionalität des Feldgerätes bzw. der Kontrollstrategie. Da sich bei Funktionsblöcken um standardisierte Anwendungsfunktionen handelt, erlauben sie das Zusammenspiel von verschiedenen Feldgeräten unterschiedlicher Hersteller zur Ausführung aufwendiger Kontrollstrategien.

Mit Hilfe von entsprechenden Tools (z.B. Syscon 302) kann die gesamte Kontrollstrategie bzw. einzelne Parameter von Funktionsblöcken geändert werden. Dies kann bei unberechtigtem Zugriff zu erheblichen Fehlfunktionen im Prozessablauf führen.

Ein wesentlicher Aspekt der Erfindung ist es, im Feldgerät ein Sicherheitsprogramm abzuspeichern, das bei einem Zugriff auf das Feldgerät über den Datenbus eine Berechtigungsprüfung des Zugriffs durchführt. Greift ein Unberechtigter über den Datenbus auf das Feldgerät zu und versucht Parameter von im Feldgerät abgespeicherten Funktionsblöcke zu ändern oder Funktionsblöcke auszutauschen, so wird dies durch die Berechtigungsprüfung verhindert. Nur berechtigte Personen haben Zugriff auf das Feldgerät.

In einfacher Weise ist das Sicherheitsprogramm Teil eines Funktionsblocks. Alternativ kann das Sicherheitsprogramm auch Teil einer im Feldgerät abgespeicherten Firmware sein.
Das Sicherheitsprogramm umfasst z. B. einen Sicherheitsschlüssel der aus einem 128 Bit-Code oder einem längerem Bit-Code besteht. Je mehr Bits der Code aufweist, desto schwieriger ist ein "Knacken" des Codes.

Der Sicherheitsschlüssel kann bei der Installation des Feldgerätes erzeugt und in diesem abgespeichert werden.
Alternativ ist der Sicherheitsschlüssel bereits im Feldgerät abgespeichert.

Nur mit dem richtigen Sicherheitsschlüssel lassen sich Änderungen an den Einstellungen des Feldgerätes insbesondere an den Funktionsblöcken vornehmen.

Es gibt prinzipiell zwei Möglichkeiten auf das Feldgerät zuzugreifen. Entweder wird ein verschlüsseltes Passwort an das Feldgerät gesendet, das mit Hilfe des Sicherheitsprogramms entschlüsselt und geprüft wird oder es werden die Daten die an ein Gerät gesendet werden verschlüsselt und das Sicherheitsprogramm entschlüsselt diese mit dem abgespeicherten Schlüssel.
Um eine noch höhere Sicherheit zu erhalten, wird der Sicherheitsschlüssel regelmäßig geändert. Dies kann z. B. täglich oder stündlich erfolgen. Je kürzer die Abstände zwischen dem Erzeugen eines neuen Sicherheitsschlüssels und entsprechendem Abspeichern ist, desto schwerer werden unerwünschte Manipulationen.
Vorteilhaft ist die Speicherung des Sicherheitsschlüssels nur im Feldgerät. Unter Feldgeräten sollen nicht nur Aktoren und Sensoren verstanden werden, sondern auch Controller, PLCs und Linking Devices. Im Prinzip alle Geräte, die über den Datenbus angesprochen und deren Einstellungen über den Datenbus geändert werden können.

## Patentansprüche

1. Verfahren zum Schutz vor einem unerlaubtem Zugriff auf ein Feldgerät (S1, S2, S3) der Prozessautomatisierungstechnik,
wobei es sich bei dem Feldgerät (S1, S2, S3) um einen Sensor oder einen Aktor handelt,
wobei das Feldgerät (S1, S2, S3) über einen Feldbus (5) mit einer Steuereinheit (7) verbunden ist, wobei die Prozesssteuerung von der Steuereinheit (7) erfolgt und wobei in der Steuereinheit (7) Messwerte verschiedener Feldgeräte (S1, S2, S3) ausgewertet werden und aufgrund der Auswertung Steuersignale für die entsprechenden Aktoren erzeugt werden,
wobei die Signalübertragung zwischen Feldgerät (S1, S2, S3) und Steuereinheit (7) entsprechend einem der Standards HART, Profibus, Foundation Fieldbus oder CAN-Bus erfolgt,
**dadurch gekennzeichnet,**
**dass** in dem Feldgerät (S1, S2, S3) Funktionsblöcke (AI, PAD, AD) abgespeichert sind, die im Wesentlichen die Funktionalität des Feldgeräts (S1, S2, S3) oder die Kontrollstrategie des Feldgeräts (S1, S2, S3) im Zusammenspiel mit anderen an den Feldbus (5) angeschlossenen Feldgeräten (S1, S2, S3) bestimmen,
**dass** die Parameter der Funktionsblöcke (AI, PAD, AD) bei der Konfiguration und Parametrierung der Feldgeräte (S1, S2, S3) festgelegt werden, und
**dass** im Feldgerät (S1, S2, S3) als Teil eines Funktionsblocks (AI, PAD, AD) oder als Teil einer im Feldgerät (S1, S2, S3) abgespeicherten Firmware ein Sicherheitsprogramm abgespeichert wird, das bei einem Zugriff auf das Feldgerät (S1, S2, S3) über den Feldbus (5) zwecks Änderungen der eingestellten Parameter der Funktionsblöcke (AI, PAD, AD) oder zwecks Austausch der Funktionsblöcke (AI, PAD, AD) eine Berechtigungsprüfung durchführt.

2. Verfahren nach Anspruch 1, **dadurch gekennzeichnet, dass** das Sicherheitsprogramm einen Sicherheitsschlüssel umfasst, der bei der Konfiguration des Feldgerätes (S1, S2, S3) im Feldgerät (S1, S2, S3) abgespeichert wird.

3. Verfahren nach einem der vorhergehenden Ansprüche, **dadurch gekennzeichnet, dass** als Sicherheitsschlüssel zumindest ein 128 Bit-Code verwendet wird.

4. Verfahren nach einem der vorhergehenden Ansprüche, **dadurch gekennzeichnet, dass** der Sicherheitsschlüssel bei der Installation des Feldgerätes (S1, S2, S3) erzeugt wird.

5. Verfahren nach einem der vorhergehenden Ansprüche 1-4, **dadurch gekennzeichnet, dass** der Sicherheitsschlüssel vom Feldgerät (S1, S2, S3) geliefert wird.

6. Verfahren nach einem der vorhergehenden Ansprüche, **dadurch gekennzeichnet, dass** der Sicherheitsschlüssel regelmäßig erneuert wird.

7. Verfahren nach einem der vorhergehenden Ansprüche, **dadurch gekennzeichnet, dass** der Sicherheitsschlüssel stündlich erneuert wird.

8. Verfahren nach einem der vorhergehenden Ansprüche, **dadurch gekennzeichnet, dass** der Sicherheitsschlüssel nur im Feldgerät (S1, S2, S3) abgespeichert wird.

9. Verfahren nach einem der vorhergehenden Ansprüche,
wobei die Parametrierung und Konfigurierung der Feldgeräte (S1, S2, S3) über den Feldbus (5) erfolgt.

10. Verfahren nach einem der vorhergehenden Ansprüche,
wobei der Feldbus (5) mit einem übergeordneten Firmennetzwerk verbunden ist und wobei zwischen dem Feldbus (5) und dem Firmennetzwerk ein Controller als Gateway dient und wobei insbesondere über das Firmennetzwerk bspw. die Prozessbeobachtung sowie die Prozessvisualisierung und das Engineering mittels entsprechender Rechnereinheiten erfolgt.

11. Anordnung umfassend ein Feldgerät (S1, S2, S3) sowie eine Steuereinheit (7) und einen Feldbus (5) über den die Steuereinheit (7) mit dem Feldgerät verbunden ist,
wobei es sich bei dem Feldgerät (S1, S2, S3) um einen Sensor oder einen Aktor handelt,
wobei die Steuereinheit (7) zur Prozesssteuerung dient und wobei die Steuereinheit (7) dazu dient, Messwerte verschiedener Feldgeräte (S1, S2, S3) auszuwerten und aufgrund der Auswertung Steuersignale für die entsprechenden Aktoren zu erzeugen,
wobei die Signalübertragung zwischen Feldgerät (S1, S2, S3) und Steuereinheit (7) entsprechend einem der Standards HART, Profibus, Foundation Fieldbus oder CAN-Bus erfolgt, **dadurch gekennzeichnet, dass** in dem Feldgerät (S1, S2, S3) Funktionsblöcke (AI, PAD, AD) abgespeichert sind, die im Wesentlichen die Funktionalität des Feldgeräts (S1, S2, S3) oder die Kontrollstrategie des Feldgeräts (S1, S2, S3) im Zusammenspiel mit anderen an den Feldbus (5) angeschlossenen Feldgeräten (S1, S2, S3) bestimmen,
dass die Parameter der Funktionsblöcke (AI, PAD, AD) bei der Konfiguration und Parametrierung der Feldgeräte (S1, S2, S3) festlegbar sind, und
dass im Feldgerät (S1, S2, S3) als Teil eines Funktionsblocks (AI, PAD, AD) oder als Teil einer im Feldgerät (S1, S2, S3) abgespeicherten Firmware ein Sicherheitsprogramm abgespeichert wird, das bei einem Zugriff auf das Feldgerät (S1, S2, S3) über den Feldbus (5) zwecks Änderungen der eingestellten Parameter der Funktionsblöcke (AI, PAD, AD) oder zwecks Austausch der Funktionsblöcke (AI, PAD, AD) eine Berechtigungsprüfung durchführt.

12. Anordnung nach Anspruch 11,
wobei die Parametrierung und Konfigurierung der Feldgeräte (S1, S2, S3) über den Feldbus (5) erfolgt.

13. Anordnung nach einem der Ansprüche 11 oder 12,
wobei der Feldbus (5) mit einem übergeordneten Firmennetzwerk verbunden ist und wobei zwischen dem Feldbus (5) und dem Firmennetzwerk ein Controller als Gateway dient und wobei insbesondere über das Firmennetzwerk bspw. die Prozessbeobachtung sowie die Prozessvisualisierung und das Engineering mittels entsprechender Rechnereinheiten erfolgt.

## Claims

1. Procedure designed to protect against unauthorized access to a field device (S1, S2, S3) used in process automation engineering,
wherein said field device (S1, S2, S3) is a sensor or an actuator,
wherein the field device (S1, S2, S3) is connected to a control unit (7) by means of a fieldbus (5), wherein process control is from the control unit (7) and wherein measured values from various field devices (S1, S2, S3) are evaluated in the control unit (7) and, on the basis of this evaluation, control signals are generated for the corresponding actuators,
wherein signal transmission between the field device (S1, S2, S3) and the control unit (7) is according to one of the standards HART, Profibus, Foundation Fieldbus or CAN-Bus,
**characterized in that**
function blocks (AI, PAD, AD) are saved in the field device (S1, S2, S3) that essentially determine the functionality of the field device (S1, S2, S3) or the control strategy of the field device (S1, S2, S3) in connection with other field devices (S1, S2, S3) connected to the fieldbus (5),
**in that** the parameters of the function block (AI, PAD, AD) are defined during the configuration and parameterization of the field devices (S1, S2, S3), and
**in that** a security program is saved in the field device (S1, S2, S3) as part of a function block (AI, PAD, AD) or as part of a firmware saved in the field device (S1, S2, S3), wherein said security program performs an authorization check when the field device (S1, S2, S3) is accessed via the fieldbus (5) for the purpose of modifying the configured parameters of the function blocks (AI, PAD, AD) or for the purpose of replacing the function blocks (AI, PAD, AD).

2. Procedure as claimed in Claim 1, **characterized in that** the security program comprises a security code, which is saved in the field device (S1, S2, S3) during the configuration of the field device (S1, S2, S3).

3. Procedure as claimed in one of the previous claims, **characterized in that** at least a 128-bit code is used as the security code.

4. Procedure as claimed in one of the previous claims, **characterized in that** the security code is generated during the installation of the field device (S1, S2, S3).

5. Procedure as claimed in one of the previous Claims 1 to 4, **characterized in that** the security code is supplied by the field device (S1, S2, S3).

6. Procedure as claimed in one of the previous claims, **characterized in that** the security code is renewed regularly.

7. Procedure as claimed in one of the previous claims, **characterized in that** the security code is renewed hourly.

8. Procedure as claimed in one of the previous claims, **characterized in that** the security code is only saved in the field device (S1, S2, S3).

9. Procedure as claimed in one of the previous claims,
wherein the parameterization and the configuration of the field devices (S1, S2, S3) are performed via the fieldbus (5).

10. Procedure as claimed in one of the previous claims,
wherein the fieldbus (5) is connected to a higher-level company network and wherein a controller acts as a gateway between the fieldbus (5) and the company network, and wherein, for example, process monitoring and process visualization and engineering are implemented by means of relevant computing units, particularly via the company network.

11. Arrangement comprising a field device (S1, S2, S3) as well as a control unit (7) and a fieldbus (5) via which the control unit (7) is connected to the field device, wherein the field device (S1, S2, S3) is a sensor or an actuator,
wherein the control unit (7) is used for process control and wherein the control unit (7) is used to evaluate measured values of various field devices (S1, S2, S3) and to generate control signals for the corresponding actuators on the basis of the evaluation,
wherein signal transmission between the field device (S1, S2, S3) and the control unit (7) is according to one of the standards HART, Profibus, Foundation Fieldbus or CAN-Bus,
**characterized in that**
function blocks (AI, PAD, AD) are saved in the field device (S1, S2, S3) that essentially determine the functionality of the field device (S1, S2, S3) or the control strategy of the field device (S1, S2, S3) in connection with other field devices (S1, S2, S3) connected to the fieldbus (5),
**in that** the parameters of the function block (AI, PAD, AD) can be defined during the configuration and parameterization of the field devices (S1, S2, S3), and
**in that** a security program is saved in the field device (S1, S2, S3) as part of a function block (AI, PAD, AD) or as part of a firmware saved in the field device (S1, S2, S3), wherein said security program performs an authorization check when the field device (S1, S2, S3) is accessed via the fieldbus (5) for the purpose of modifying the configured parameters of the function blocks (AI, PAD, AD) or for the purpose of replacing the function blocks (AI, PAD, AD).

12. Arrangement as claimed in Claim 11,
wherein the parameterization and configuration of the field devices (S1, S2, S3) are performed via the fieldbus (5).

13. Arrangement as claimed in one of the Claims 11 or 12,
wherein the fieldbus (5) is connected to a higher-level company network and wherein a controller acts as a gateway between the fieldbus (5) and the company network, and wherein, for example, process monitoring and process visualization and engineering are implemented by means of relevant computing units, particularly via the company network.

## Revendications

1. Procédé destiné à la protection contre un accès non autorisé à un appareil de terrain (S1, S2, S3) de la technique d'automatisation des process,
pour lequel il s'agit, concernant l'appareil de terrain (S1, S2, S3), d'un capteur ou d'un actionneur,
pour lequel l'appareil de terrain (S1, S2, S3) est relié via un bus de terrain (5) avec une unité de commande (7), pour lequel la commande du process est réalisée par l'unité de commande (7) et pour lequel des valeurs mesurées provenant de différents appareils de terrain (S1, S2, S3) sont exploitées dans l'unité de commande (7) et, sur la base de l'exploitation, des signaux de commande sont générés pour les actionneurs correspondants,
pour lequel la transmission des signaux entre l'appareil de terrain (S1, S2, S3) et l'unité de commande (7) s'effectue selon l'un des standards HART, Profibus, Foundation Fieldbus ou CAN-Bus,
**caractérisé**
**en ce que** sont mémorisés, dans l'appareil de terrain (S1, S2, S3), des blocs de fonction (AI, PAD, AD), qui déterminent pour l'essentiel la fonctionnalité de l'appareil de terrain (S1, S2, S3) ou la stratégie de contrôle de l'appareil de terrain (S1, S2, S3) en combinaison avec d'autres appareils de terrain (S1, S2, S3) raccordés au bus de terrain (5),
**en ce que** les paramètres des blocs de fonction (AI, PAD, AD) sont définis lors de la configuration et du paramétrage des appareils de terrain (S1, S2, S3), et
**en ce qu'**est mémorisé - dans l'appareil de terrain (S1, S2, S3), en tant qu'élément d'un bloc de fonction (AI, PAD, AD) ou en tant qu'élément d'un firmware mémorisé dans l'appareil de terrain (S1, S2, S3) - un programme de sécurité, qui effectue un contrôle d'autorisation en cas d'accès à l'appareil de terrain (S1, S2, S3) via le bus de terrain (5) à des fins de modifications des paramètres réglés des blocs de fonction (AI, PAD, AD) ou à des fins d'échange des blocs de fonction (AI, PAD, AD).

2. Procédé selon la revendication 1, **caractérisé en ce que** le programme de sécurité comprend une clé de sécurité, laquelle clé est mémorisée dans l'appareil de terrain (S1, S2, S3) lors de la configuration de l'appareil de terrain (S1, S2, S3).

3. Procédé selon l'une des revendications précédentes, **caractérisé en ce qu'**est utilisée, comme clé de sécurité, au moins un code de 128 bits.

4. Procédé selon l'une des revendications précédentes, **caractérisé en ce que** le code de sécurité est généré lors de l'installation de l'appareil de terrain (S1, S2, S3).

5. Procédé selon l'une des revendications précédentes 1 à 4, **caractérisé en ce que** le code de sécurité est délivré par l'appareil de terrain (S1, S2, S3).

6. Procédé selon l'une des revendications précédentes, **caractérisé en ce que** la clé de sécurité est renouvelée régulièrement.

7. Procédé selon l'une des revendications précédentes, **caractérisé en ce que** la clé de sécurité est renouvelée toutes les heures.

8. Procédé selon l'une des revendications précédentes, **caractérisé en ce que** la clé de sécurité est mémorisée uniquement dans l'appareil de terrain (S1, S2, S3).

9. Procédé selon l'une des revendications précédentes,
pour lequel le paramétrage et la configuration des appareils de terrain (S1, S2, S3) sont réalisés via le bus de terrain (5).

10. Procédé selon l'une des revendications précédentes,
pour lequel le bus de terrain (5) est relié avec un réseau d'entreprise hiérarchiquement supérieur et pour lequel un contrôleur sert de passerelle entre le bus de terrain (5) et le réseau d'entreprise, et pour lequel, par exemple, la surveillance du process ainsi que la visualisation du process et l'ingénierie sont réalisées au moyen d'unités de traitement informatiques correspondantes, notamment par l'intermédiaire du réseau d'entreprise.

11. Ensemble comprenant un appareil de terrain (S1, S2, S3) ainsi qu'une unité de commande (7) et un bus de terrain (5) par l'intermédiaire duquel l'unité de commande (7) est reliée avec l'appareil de terrain,
pour lequel il s'agit, concernant l'appareil de terrain (S1, S2, S3), d'un capteur ou d'un actionneur,
pour lequel l'unité de commande (7) sert à la commande du process et pour lequel l'unité de commande (7) sert à exploiter les valeurs mesurées provenant de différents appareils de terrain (S1, S2, S3) et à générer, sur la base de l'exploitation, des signaux de commande pour les actionneurs correspondants, pour lequel la transmission des signaux entre l'appareil de terrain (S1, S2, S3) et l'unité de commande (7) s'effectue selon l'un des standards HART, Profibus, Foundation Fieldbus ou CAN-Bus,
**caractérisée**
**en ce que** sont mémorisés, dans l'appareil de terrain (S1, S2, S3), des blocs de fonction (AI, PAD, AD), qui déterminent pour l'essentiel la fonctionnalité de l'appareil de terrain (S1, S2, S3) ou la stratégie de contrôle de l'appareil de terrain (S1, S2, S3) en combinaison avec d'autres appareils de terrain (S1, S2, S3) raccordés au bus de terrain (5),
**en ce que** les paramètres des blocs de fonction (AI, PAD, AD) peuvent être définis lors de la configuration et du paramétrage des appareils de terrain (S1, S2, S3), et
**en ce qu'**est mémorisé - dans l'appareil de terrain (S1, S2, S3), en tant qu'élément d'un bloc de fonction (AI, PAD, AD) ou en tant qu'élément d'un firmware mémorisé dans l'appareil de terrain (S1, S2, S3) - un programme de sécurité, qui effectue un contrôle d'autorisation en cas d'accès à l'appareil de terrain (S1, S2, S3) via le bus de terrain (5) à des fins de modifications des paramètres réglés des blocs de fonction (AI, PAD, AD) ou à des fins d'échange des blocs de fonction (AI, PAD, AD).

12. Ensemble selon la revendication 11,
pour lequel le paramétrage et la configuration des appareils de terrain (S1, S2, S3) sont réalisés via le bus de terrain (5).

13. Ensemble selon l'une des revendications 11 ou 12,
pour lequel le bus de terrain (5) est relié avec un réseau d'entreprise hiérarchiquement supérieur et pour lequel, par exemple, la surveillance du process ainsi que la visualisation du process et l'ingénierie sont réalisées au moyen d'unités de traitement informatiques correspondantes, notamment par l'intermédiaire du réseau d'entreprise.
